# EUROPEAN PATENT APPLICATION

(11) **EP 4 327 976 A1**
(43) Date of publication of application: **28.02.2024**
(21) Application number: 22191691.9
(22) Date of filing: 23.08.2022
(51) Int. Cl.: B23P 19/08, F16J 15/3268

(54) **APPARATUS AND METHOD FOR MOUNTING A SEAL AT OR IN A HOUSING**

(71) Applicant: Aptiv Technologies Limited, St. Michael (BB)
(72) Inventor: Momot, Piotr, 34-116 Spytkowice (PL); Olek, Pawel, 43-502 Czechowice-Dziedzice (PL); Brodacki, Maciej, 31-444 Kraków (PL); Slizowski, Tomasz, 30-693 Krakow (PL)
(74) Representative: Manitz Finsterwald Patent- und Rechtsanwaltspartnerschaft mbB

(57) **Abstract**

An apparatus (100) is provided for mounting a seal (110) at or in a housing (120). The apparatus comprises a support device (130) for receiving the seal (110) and a transfer device (140). The support device (130) is configured to provide a predefined shape to the seal (110), wherein the predefined shape corresponds to a desired position of the seal (110)at or in the housing (120) . The transfer device (140) is configured to transfer the seal (110) from the support device (130) to the housing (120). A corresponding method for mounting a seal (110) at or in a housing (120) is also disclosed.

## Description

### FIELD

The present disclosure relates to an apparatus and a method for mounting a seal at or in a housing.

### BACKGROUND

In the automotive industry, there is a constant need to shorten production time in manufacturing processes and, at the same time, to increase product quality and repeatability. The improvement of manufacturing plants is therefore a continuous process.

One example is the installation of a seal at or in a housing, e.g. for high voltage products. The proper installation of such a seal is an important factor for the quality of such high voltage products.

Usually, the installation of sealing parts at or in a housing is accomplished by using handmade tools or semi-automated stations. Both require manual steps to be performed by an operator. Such a manual work often leads to errors and to an extended cycle time for the installation of the respective sealing parts.

Moreover, it is often not possible to control the installation process properly. For example, a seal may be twisted during installation without any notice of the operator. Due to this, a malfunction of the seal may be discovered after completing the manufacturing process for the high voltage product. This may reduce the productivity of the manufacturing.

Accordingly, there is a need to have an apparatus and a method which are able to mount a seal at or in a housing in an automated and reliable manner.

### SUMMARY

The present disclosure provides an apparatus and a method according to the independent claims. Embodiments are given in the subclaims, the description and the drawings.

In one aspect, the present disclosure is directed at an apparatus for mounting a seal at or in a housing. The apparatus comprises a support device for receiving the seal and a transfer device. The support device is configured to provide a predefined shape to the seal, wherein the predefined shape corresponds to a desired position of the seal at or in the housing. The transfer device is configured to transfer the seal from the support device to the housing.

The support device is able to receive the seal in a "loose" condition. That is, any deforming, stretching or extending of the seal may be avoided or detected when receiving the seal at the support device. By this means, unexpected deforming of the seal like twisting may generally be prevented when receiving the seal at the support device.

Thereafter, the predefined shape is provided to the seal by the support device, wherein the correspondence of the desired position of the seal at or in the housing and of the predefined shape refers to a proper position and to proper dimensions of the seal which fit exactly to the desired position, e.g. to a slot within the housing. For transferring the seal to the housing, the housing may be located close to the support device such that the transfer device may simply push the seal to the housing over a short distance only.

Since the shape of the seal is controlled by the support device such that it exactly fits to the desired position at or in the housing, the quality and reliability of the mounting process is enhanced. In addition, the mounting is accomplished in a fully automated manner without any manual steps. Hence, the production time for installing the seal is reduced while improving the repeatability of the mounting process.

According to an embodiment, the support device may comprise a plurality of parts which may be movable relative to each other and each of which may be configured to modify the shape of the seal. The predefined shape of the seal may therefore be controlled by the movement of the parts of the support device relative to each other. As such, forming the seal to achieve the predefined shape may be controlled by the movement of the parts in an efficient manner.

The plurality of parts may include at least two group of parts, and each group may be associated with a respective direction in which the parts of the respective group may be movable. The direction associated with the respective group may be different from the directions associated with other groups. For example, at least two parts of each group may be configured to move oppositely to each other.

By associating the group of parts with a certain movement direction, the extension of the seal in the corresponding direction or dimension may be reliably controlled. Therefore, a uniform extension of the seal may be achieved which may avoid an unexpected deformation like a twist of the seal.

In a specific example, the support device may include four parts, and respective two of these may be movable along a predefined line oppositely to each other. If the parts are moving with approximately the same velocity, a uniform extension of the circumference of the seal may be achieved.

The support device may include at least one actuator for moving the plurality of parts. The actuator may be a pneumatic actuator. Alternatively, the actuator may be an electric and/or hydraulic actuator. By controlling such an actuator, a uniform shaping of the seal may be ensured.

According to a further embodiment, the apparatus may further include a vision system which may be configured to monitor the position of the seal with respect to the support device and with respect to the housing. By applying the vision system, any irregularity may be easily discovered during receiving and forming the seal and during the transfer to the housing. For example, an unexpected twist of the seal may be determined by the vision system which could remain undiscovered otherwise. Therefore, the reliability of the apparatus may be improved due to the monitoring of the vision system.

The vision system may include at least one monitoring device like an optical sensor being configured to monitor the seal from at least one direction. Moreover, the vision system may include at least two different monitoring devices being configured to monitor the seal from at least two different directions. In other words, a respective monitoring device or optical sensor may be provided for the at least two different directions. For example, the at least two different directions for monitoring the seal may be perpendicular to each other. In a further example, a respective optical sensor or device may be installed on both sides of the support device, and a further optical device or sensor may be installed on top of the support device. By monitoring the seal from different sides or directions, the reliability for mounting the seal properly to the housing may be further enhanced.

The apparatus may further include a positioning device for positioning the housing close to the support device in order to transfer the seal from the transport device to the housing. That is, there may be a short distance only between the seal located at the supporting device and the housing just before transferring the seal to the housing. By such a short distance, the reliability of transferring the seal to the housing may be improved. In addition, a proper correspondence of the predefined shape of the seal and the desired position of the seal at or in the housing may be suitably controlled due to the close distance between the support device and the housing provided by the positioning device.

The transfer device may be further configured to push the seal away from the support device and into the desired position at or in the housing. If the housing is sufficiently close to the support device before transferring the seal to the housing, the transfer device may therefore be configured as a pushing unit for shifting the seal just over a short distance.

In another aspect, the present disclosure is directed at a method for mounting a seal at or in a housing. According to the method, the seal is received at a support device, and a predefined shape is provided to the seal via the support device. The predefined shape corresponds to a desired position of the seal at or in the housing. After providing the predefined shape, the seal is transferred from the support device to the housing via a transfer device.

As such, the method includes steps which are carried by the apparatus as described above. Therefore, the benefit, the advantages and the disclosure for the apparatus are also valid for the method according to the disclosure.

According to an embodiment, the seal may be received at the support device without any deformation of the seal. That is, the seal can be received in a "loose" condition in which e.g. a twist of the seal is avoided. After receiving the seal at the support device, a correct orientation and a correct shape of the seal may be controlled visually. By this visual control, a deformation or twist of the seal and any incorrect positioning of the seal with respect to the support device can be detected and corrected before the further steps of the method are carried out.

Moreover, the seal may be uniformly extended via the support device in order to provide the predefined shape to the seal. Due to the uniform extension, an unexpected deformation or twist of the seal may be prevented during the shaping of the seal.

During the step of providing the predefined shape to the seal via the support device, the seal may be monitored by a vision system. Therefore, any irregularity of the shaping may be discovered immediately such that a seal having an improper shape may not be transferred to the housing. Moreover, the housing may be positioned close to the seal such that the seal is aligned with a desired position at or in the housing. Due to this alignment, the reliability of the transfer step to the housing via the transfer device may be improved.

In another aspect, the present disclosure is directed at a computer system, said computer system being configured to carry out several or all steps of the method described herein.

The steps of the method as described above may be performed by a seal mounting controller which may be implemented by the computer system and which may also constitute a part of the apparatus as described above.

The computer system may comprise a processing unit, at least one memory unit and at least one non-transitory data storage. The non-transitory data storage and/or the memory unit may comprise a computer program for instructing the computer to perform several or all steps or aspects of the computer implemented method described herein.

In another aspect, the present disclosure is directed at a non-transitory computer readable medium comprising instructions for carrying out several or all steps or aspects of the method described herein. The computer readable medium may be configured as: an optical medium, such as a compact disc (CD) or a digital versatile disk (DVD); a magnetic medium, such as a hard disk drive (HDD); a solid state drive (SSD); a read only memory (ROM); a flash memory; or the like. Furthermore, the computer readable medium may be configured as a data storage that is accessible via a data connection, such as an internet connection. The computer readable medium may, for example, be an online data repository or a cloud storage.

The present disclosure is also directed at a computer program for instructing a computer to perform several or all steps or aspects of the method described herein.

### DRAWINGS

Exemplary embodiments and functions of the present disclosure are described herein in conjunction with the following drawings, showing schematically:
- Fig. 1: an overview of an apparatus for mounting a seal at or in a housing according to the disclosure,
- Fig. 2: a support device of the apparatus as shown in Fig. 1 configured to receive the seal,
- Fig. 3: a holding device of the apparatus as shown in Fig. 1 configured to receive and to move the housing,
- Fig. 4: a vision system of the apparatus as shown in Fig. 1,
- Fig. 5: details for the support device shaping the seal,
- Fig. 6: details for moving parts of the support device,
- Fig. 7: steps of positioning the housing close to the support device,
- Fig. 8: steps of transferring the seal from the support device to the housing,
- Fig. 9: a flow diagram illustrating a method for mounting a seal at or in a housing according to various embodiments,
- Fig. 10: a seal mounting controller according to various embodiments, and
- Fig. 11: a computer system including computer hardware components configured to carry out steps of a method for mounting a seal at or in a housing according to various embodiments.

### DETAILED DESCRIPTION

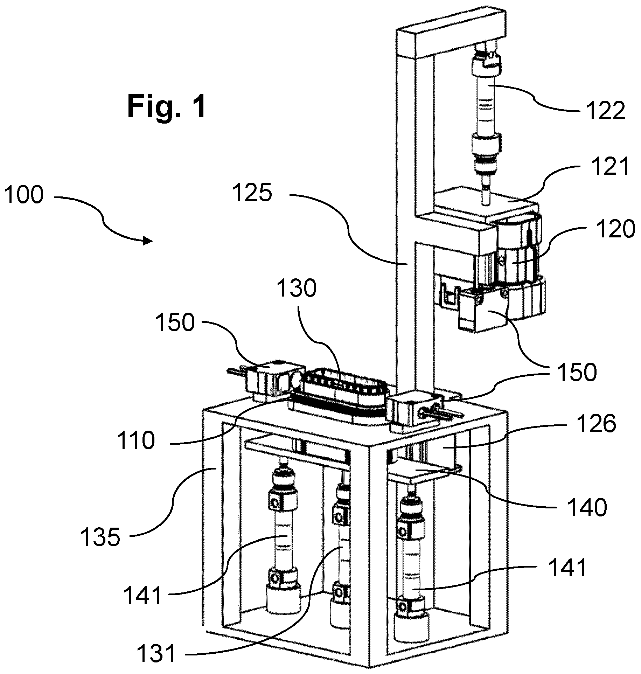

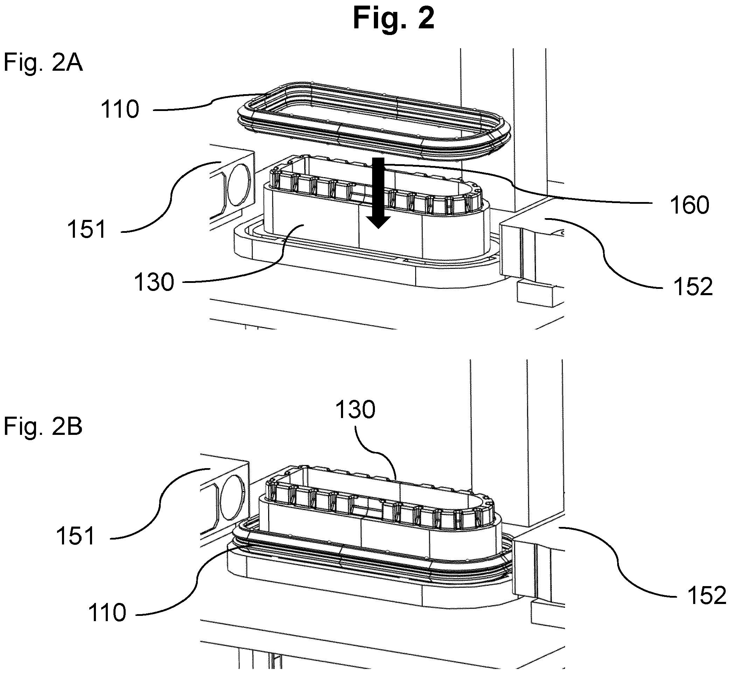

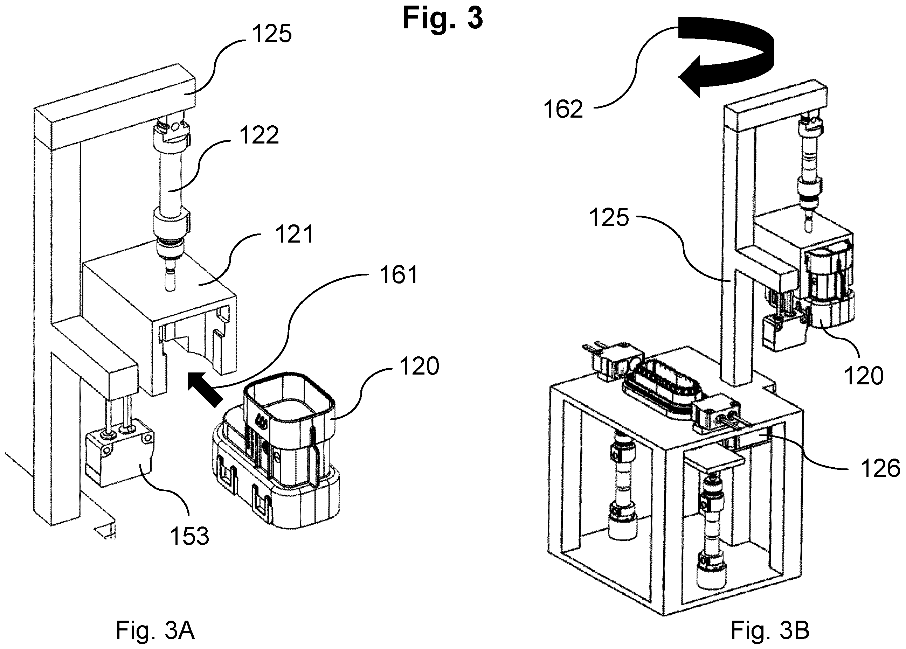

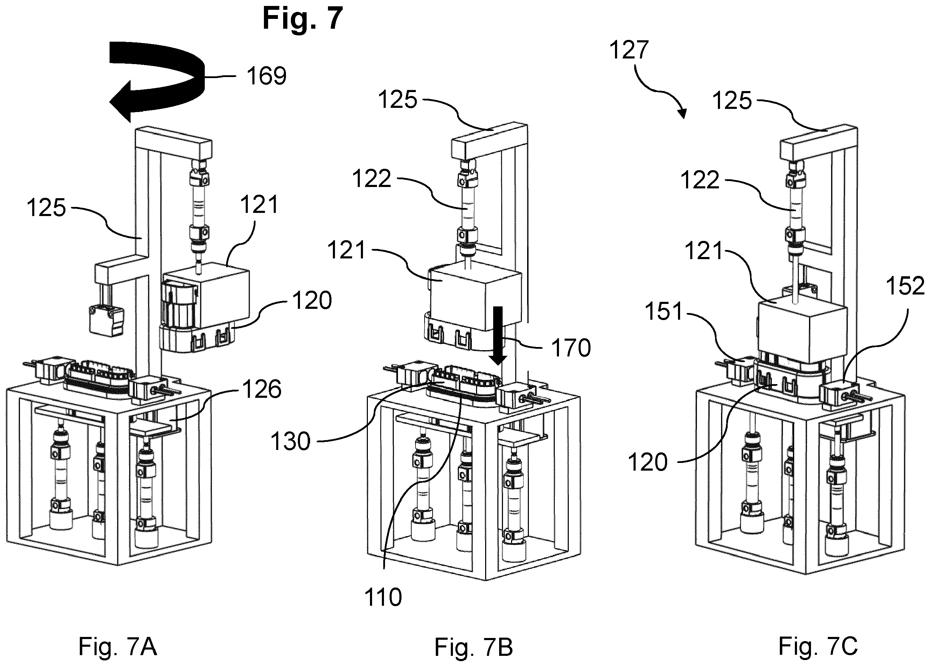

Fig. 1 depicts an apparatus 100 for mounting a seal 110 (see also Fig. 2) at or in a housing 120. The housing 120 is inserted in a holder 121 which is connected to a pneumatic actuator 122 for moving the holder 121 and the housing 120 up and down. The actuator 122 is attached to a rotatable arm 125 of the apparatus 100 (see also Figs. 3 and 7). The rotatable arm 125 can be rotated by a stepper motor 126.

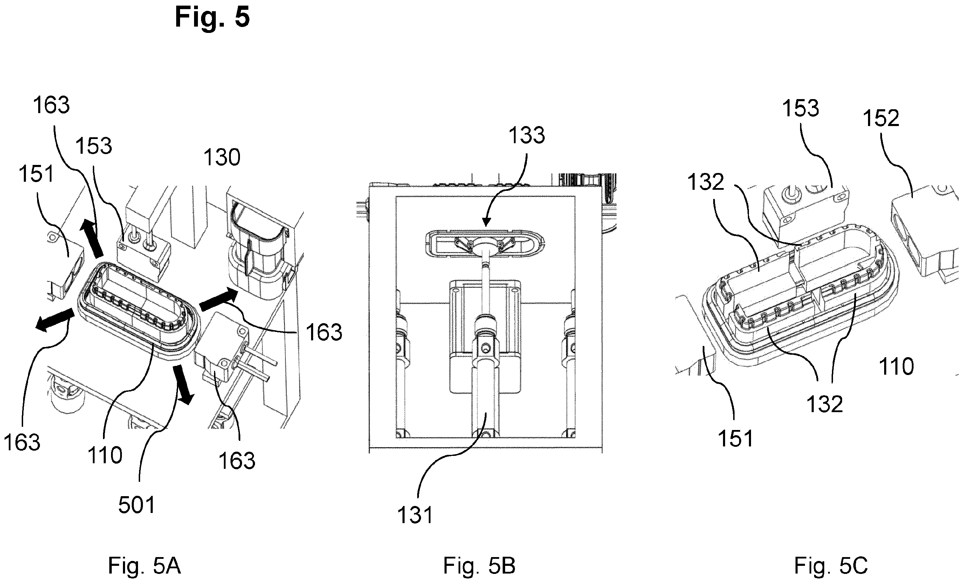

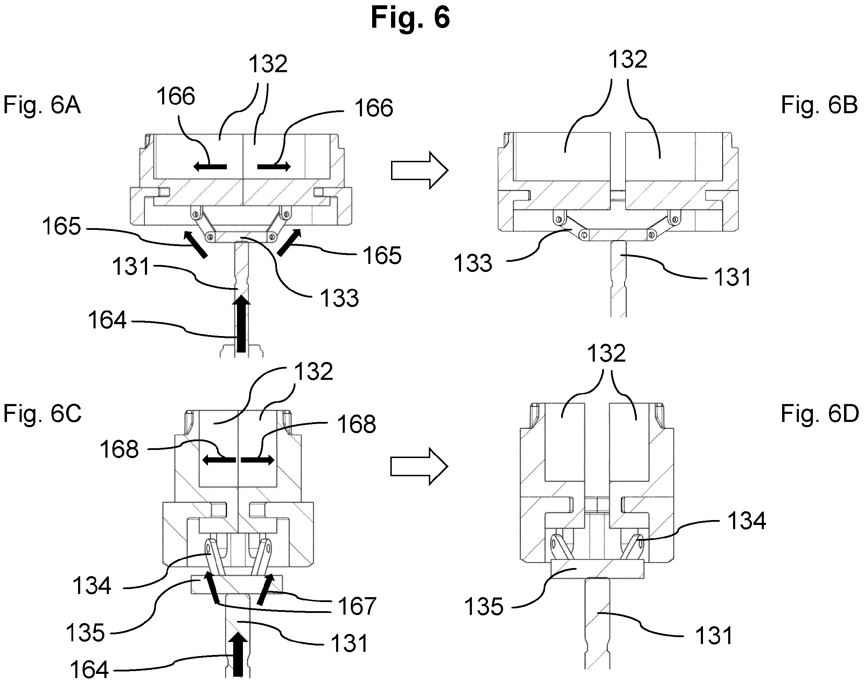

The apparatus 100 includes a support device 130 which is configured to receive the seal 110 (see also Fig. 2). The support device 130 is connected to a pneumatic actuator 131 which is configured to move parts 132 (see Figs. 5 and 6) of the support device 130 in order to provide a predefined shape to the seal 110, as will be described below. The support device 130 is positioned on top of a frame 135 in which the actuator 131 is mounted as well.

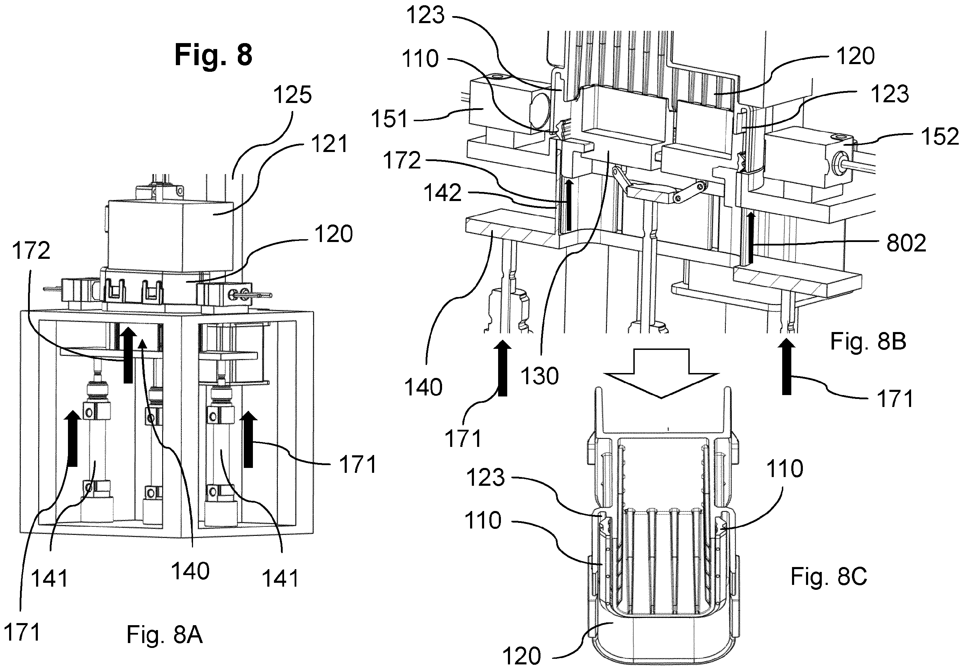

The apparatus 100 further includes a transfer device 140 which is configured to transfer the seal 110 from the support device 130 to the housing 120, as will be described in detail in context of Fig. 8. The transfer device 140 is connected to two further pneumatic actuators 141 which are configured to move the transfer device 140. Generally, the actuators 122, 131, 141 may also be configured as electric and/or hydraulic actuators.

The apparatus 100 is further provided with a vision system 150 which includes three monitoring devices 151, 152 and 153 (see Figs. 2, 3 and 4). The monitoring devices may be configured as respective optical sensors 151, 152, 153. Via the vision system 150, the seal 110 is monitored when the support device 130 receives the seal 110 and provides the predefined shape to the seal 110. As such, any irregularities during the shaping process can be discovered via the vision system 150.

According to the related art, a seal like the seal 110 is usually mounted at or in a housing like the housing 120 by using a manual tool. In this manual process, an operator manually places the seal by stretching it over a guiding part of the tool. Thereafter, the tool is placed together with a seal at or in the housing where the seal is to be installed. Finally, a movable part of the tool is pushed toward or into the housing in order to transfer or slide the seal to a desired position at or in the housing.

During this manual process, however, the seal may be deformed or twisted without the operator noticing such a deformation or twist. Therefore, the seal may not be placed properly at the desired position of the housing. In addition, the manual process may require a certain cycle time which may not be shortened easily.

Therefore, the apparatus 100 according to the disclosure provides a fully automated process for mounting the seal 110 at or in the housing 120, as will be described below in detail. Such an automated process requires a shorter cycle time, i.e. in comparison to the manual process. In addition, the reliability of the mounting is improved, e.g. by applying the vision system 150 for monitoring the seal 110 during shaping and mounting.

As depicted in Fig. 2, the seal 110 is first received by the supporting device 130. Fig. 2A shows the seal 110 in an initial state without any stretching above the supporting device 130. As indicated by the arrow 160, the seal is moved downwards onto the supporting device 130 in a "loose" condition. That is, any deforming, stretching or extending of the seal 110 is avoided when the seal 110 is received by the support device 130 as shown in Fig. 2B. In addition, the optical sensors 151, 152 of the vision system 150 monitor the process of receiving the seal 110 by the support device 130. By this means, an unexpected and undesired twist of the seal 110, for example, may be easily discovered via the vision system 150.

Fig. 3A depicts the process of inserting the housing 120 into the holder 121 which is indicated by the arrow 161. The holder 121 includes a proximity switch (not shown) which is provided for controlling a proper position of the housing 120 in the holder 121. Moreover, the third optical sensor 153 of the vision system 150 is connected to the rotatable arm 125 in order to provide different positions for the third optical sensor 153 with respect to the frame 135 (see Fig. 1) and with respect to the support device 130. As mentioned above, the pneumatic actuator 122 is provided for a vertical movement of the holder 121 together with the housing 120.

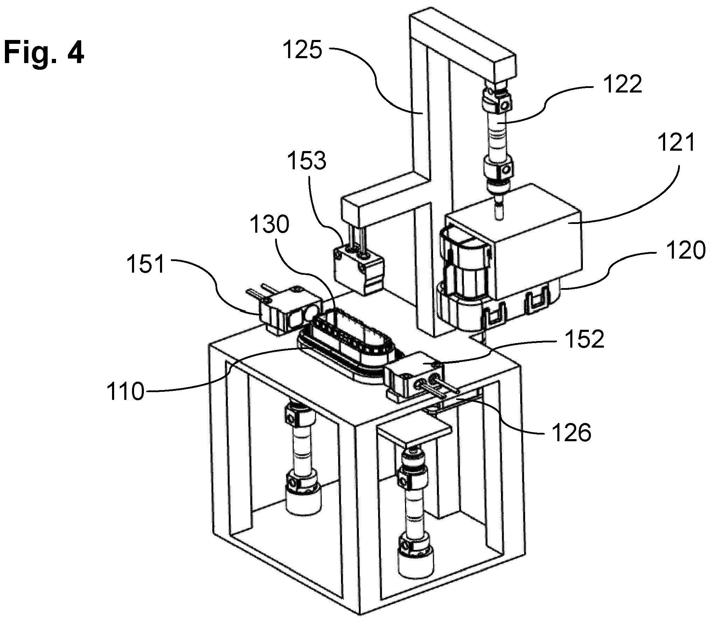

After inserting the housing 120 into the holder 121, the rotatable arm 125 is rotated via the stepper motor 126, as indicated by the arrow 162, until the third optical sensor 153 is located in a position above the support device 130, as depicted in Fig. 4. That is, after a rotation of the rotatable arm 125 of about 90° with respect to the position as shown in Fig. 3, the third optical sensor 153 is located on top of the support device 130 and the seal 110.

In this position of the rotatable arm 125, the seal 110 which is received by the support device 130 is monitored from three sides via the three optical sensors 151, 152, 153 of the optical system 150 regarding a proper position and alignment. By this means, the step of providing a predefined shape to the seal 110 is also controlled. This shaping process is now described in context of Figs. 5 and 6.

As can be seen in Fig. 5C, the support device 130 includes four parts 132 which are movable relative to each other. This is indicated by the arrows 163 as shown in Fig. 5A. In order to move the parts 132 of the support device 130, the pneumatic actuator 131 is activated to exert a pressure against a linkage 133 (see Fig. 5B) which is connected to each of the parts 132. By this pressure exerted by the actuator 131 against the linkage 133, the four parts 132 of the support device 130 are separated from each other as shown in Fig. 5C, and the seal 110 is extended uniformly, as is also indicated by the four arrows 163 of Fig. 5A.

By this means, the seal 110 is provided a predefined shape which corresponds to a desired position of the seal 110 at or in the housing 120, as will be described below. The process of extending the seal 110 by moving the parts 132 of the support device 130 is also controlled by the optical sensors 151, 152 and 153 of the vision system 150 which are able to monitor the position and the shape of the seal 110.

Fig. 6 depicts details for moving the parts 132 of the support device 130. As shown in Figs. 6A and 6B, the pressure shown as arrow 164 and provided by the pneumatic actuator 131 is transferred to the linkage 133 which extends as shown by the arrows 165 in Fig. 6A. This leads to a movement of the parts 132 of the support device 130 relative to each other, as indicated by the upper arrows 166 and visualized in Fig. 6B.

In a direction perpendicular to the viewing direction of Figs. 6A and 6B, the pneumatic actuator 131 is also connected arms 136 which are connected to a plate 137. If the pneumatic actuator 131 exerts a pressure to the plate 137 as indicated again by the arrow 164, the arms 136 are moving oppositely to each other as indicated by the arrows 167. Due to this separation, the parts 132 of the support device 130 are also separated from each other in the direction perpendicular to the direction as shown in Figs. 6A and 6B. This indicated by the arrows 168 in Fig. 6C visualized in Fig. 6D.

In summary, the four parts 132 of the support device 130 are spatially separated from each other as shown in Fig. 5C in order to extend the seal 110 in the desired manner. As shown in Figs. 5A and 5C, the movement and the separation of the parts 132 of the support device 130 are controlled by the optical sensors 151, 152, 153 of the vision system 150.

After extending the seal 110 as shown in Fig. 5C, the rotatable arm 125 is rotated again as indicated in Fig. 7A by arrow 169. In detail, the rotatable arm 125 is further rotated by approximately 90° until the holder 121 including the housing 120 is located above the support device 130 including the seal 110. This is depicted in Fig. 7B. Thereafter, the pneumatic actuator 122 which is connected to the rotatable arm 125 is activated in order to move the holder 121 downwards, as indicated by arrow 170, until the housing 120 is located on top of the support device 130 including the seal 110. The position of the housing 120 on top of the support device 130 is shown in Fig. 7C.

The proper position of the housing 120 on top of the support device 130 is again controlled via the first and the second optical sensors 151, 152. Due to this positioning of the housing 120 on top of the support device 130, the holder 121, the pneumatic actuator 122, the rotatable arm 125 and the stepper motor 126 may also be regarded as a positioning device 127 for the housing 120 (see Fig. 7C). Correct positioning of the housing 120 is also ensured by grooves in the parts 132 of the support device 130 corresponding to ribs in the housing 120.

Fig. 8 depicts the transfer of the seal 110 from the support device 130 to the housing 120. As shown in Fig. 8A, the pneumatic actuators 141 are activated after the housing 120 has been positioned properly on top of the support device 130. That is, the pneumatic actuators 141 exert a pressure against a plate of the transfer device 140 such that the transfer device 140 is moved upwards as indicated by the arrows 171 and 172, respectively, in Figs. 8A and 8B. Fig. 8B is a sectional view along a plane passing through the optical sensors 151, 152 and being parallel to the rotatable arm 125.

Due to this movement of the entire transfer device 140 in the upward direction, a circumferential extension or upper part 142 of the transfer device 140 pushes against the seal 110 which is extended by the support device 130 as shown in Fig. 5C. Due to this, the seal 110 is pushed into a slot 123 of the housing 120 which is also regarded as the desired position for the seal 110 in the housing 120. Since the seal 110 has been shaped in order to match to the desired position within the slot 123 exactly (see Fig. 5C), the force exerted by the upper part 142 to the seal 110 just shifts the seal into the slot 123, and further forces which could provide twists or turns to the seal 110 are avoided.

The final arrangement of the seal 110 in the desired position within the slot of the housing 120 is shown in Fig. 8C which is a sectional view of the housing 110 perpendicular to the sectional view as shown in Fig. 8B. The seal 110 is located at its desired position within the slot 123 of the housing 120.

In summary, the seal 110 is provided with a predefined shape as shown in Fig. 5C via the extension provided by the support device 130. This predefined shape exactly corresponds or fits to the desired position of the seal 110 within the slot 123 of the housing 120, as depicted in Fig. 8C.

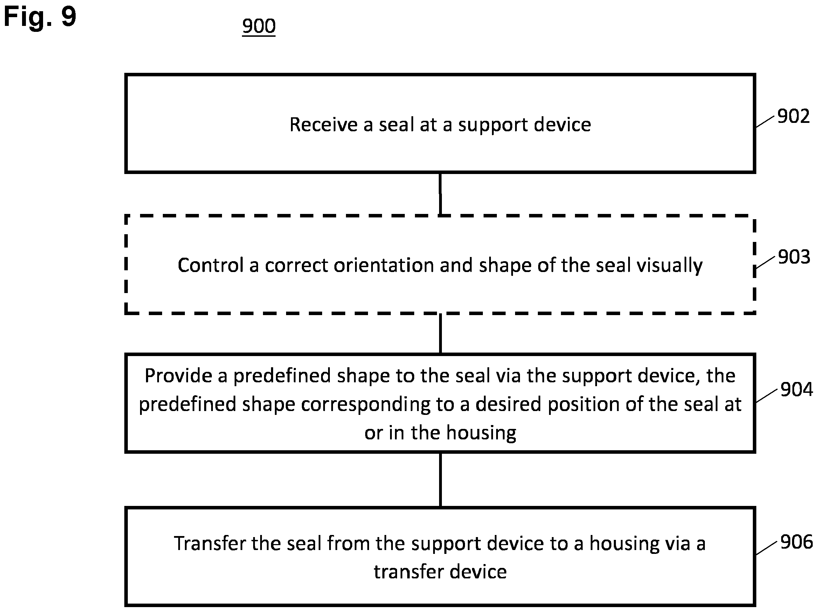

Fig. 9 shows a flow diagram 900 illustrating a method for mounting a seal at or in a housing. At 902, a seal may be received at a support device. At 903, as an optional step depicted by dashed lines, a correct orientation and a correct shape of the seal may be controlled visually. At 904, a predefined shape may be provided to the seal via the support device, the predefined shape corresponding to a desired position of the seal at or in the housing. At 906, the seal may be transferred from the support device to the housing via a transfer device.

According to various embodiments, the seal may be received at the support device without any deformation of the seal.

According to various embodiments, the seal may be uniformly extended via the support device in order to provide the predefined shape to the seal.

According to various embodiments, the seal may be monitored by a vision system during the step of providing the predefined shape to the seal via the support device.

According to various embodiments, the housing may be positioned close to the seal such that the seal may be aligned with the desired position at or in the housing.

Each of the steps 902, 903, 904 and 906 and the further steps described above may be performed by computer hardware components.

According to various embodiments, an apparatus for mounting a seal at or in a housing may comprise a support device for receiving the seal, wherein the support device may be configured to provide a predefined shape to the seal, the predefined shape corresponding to a desired position of the seal at or in the housing, and a transfer device configured to transfer the seal from the support device to the housing.

According to various embodiments, the support device may comprise a plurality of parts which are movable relative to each other and which are each configured to modify the shape of the seal.

According to various embodiments, the plurality of parts may include at least two groups of parts, each group may be associated with a respective direction in which the parts of the respective group are movable, and the direction associated with the respective group may be different from the directions associated with the other groups.

According to various embodiments, at least two parts of each group may be configured to move oppositely to each other.

According to various embodiments, the support device may include at least one actuator for moving the plurality of parts.

According to various embodiments, the apparatus may further include a vision system which may be configured to monitor the position of the seal with respect to the support device and with respect to the housing.

According to various embodiments, the vision system may include at least one monitoring device configured to monitor the seal from at least one direction.

According to various embodiments, the vision system may include at least two different monitoring devices configured to monitor the seal from at least two different directions.

According to various embodiments, the at least two different directions for monitoring the seal may be perpendicular to each other.

According to various embodiments, the apparatus may further include a positioning device for positioning the housing close to the support device in order to transfer the seal from the support device to the housing.

According to various embodiments, the transfer device may be further configured to push the seal away from the support device and into the desired position at or in the housing.

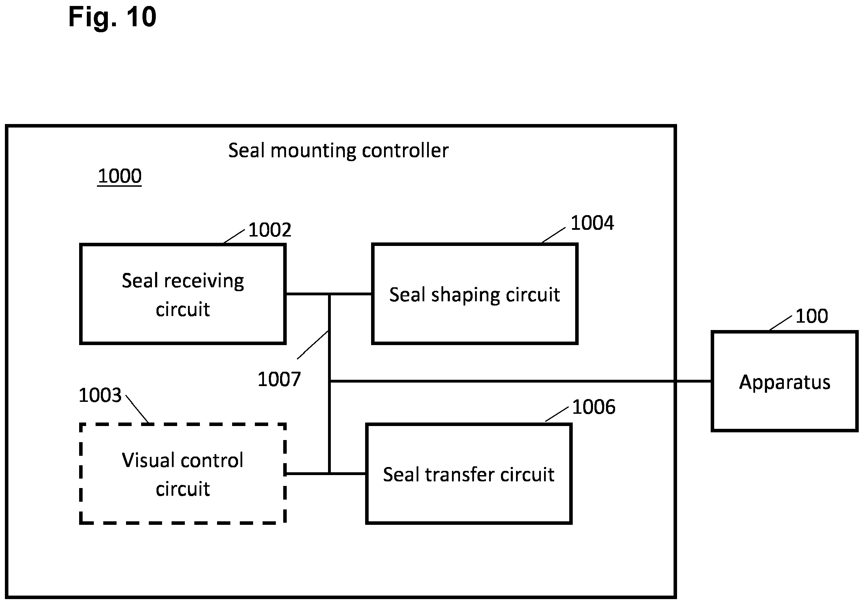

Fig. 10 shows a seal mounting controller 1000 according to various embodiments which is configured to control the apparatus 100 as described above by performing the steps of the method as shown in Fig. 9, for example. The seal mounting controller 1000 may include a seal receiving circuit 1002, a visual control circuit 1003, a seal shaping circuit 1004, and a seal transfer circuit 1006.

The seal receiving circuit 1002 may be configured to control the step of receiving a seal at a support device. The optional visual control circuit 1003 depicted by dashed lines may be configured to control the step of visually controlling a correct orientation and a correct shape of the seal. The seal shaping circuit 1004 may be configured to control the step of providing a predefined shape to the seal via the support device, the predefined shape corresponding to a desired position of the seal at or in the housing. The seal transfer circuit 1006 may be configured to control the step of transferring the seal from the support device to the housing via a transfer device.

The seal receiving circuit 1002, the seal shaping circuit 1004, and the seal transfer circuit 1006 may be coupled to each other, e.g. via an electrical connection 1007, such as e.g. a cable or a computer bus or via any other suitable electrical connection to exchange electrical signals. In addition, the circuits 1002 to 1006 of the seal mounting controller 1000 may be connected to the apparatus 100 by a further electrical connection 1007. Although the seal mounting controller 1000 is depicted as a separate entity in Fig. 10, the seal mounting controller 1000 may also be integrated in the apparatus 100.

A "circuit" may be understood as any kind of a logic implementing entity, which may be special purpose circuitry or a processor executing a program stored in a memory, firmware, or any combination thereof.

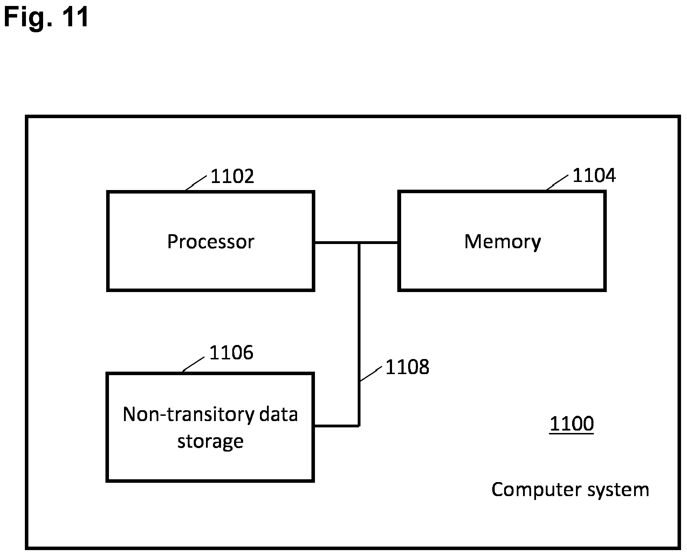

Fig. 11 shows a computer system 1100 with a plurality of computer hardware components configured to carry out steps of a method as shown in Fig. 9 for mounting a seal at or in a housing according to various embodiments. The computer system 1100 may include a processor 1102, a memory 1104, and a non-transitory data storage 1106.

The processor 1102 may carry out instructions provided in the memory 1104. The non-transitory data storage 1106 may store a computer program, including the instructions that may be transferred to the memory 1104 and then executed by the processor 1102.

The processor 1102, the memory 1104, and the non-transitory data storage 1106 may be coupled with each other, e.g. via an electrical connection 1108, such as e.g. a cable or a computer bus or via any other suitable electrical connection to exchange electrical signals.

As such, the processor 1102, the memory 1104 and the non-transitory data storage 1106 may represent the seal receiving circuit 1002, the seal shaping circuit 1004, and the seal transfer circuit 1006, as described above, of the seal mounting controller 1000 being in communicative connection to the apparatus 100 as shown in Figs. 1 to 8, for example.

The terms "coupling" or "connection" are intended to include a direct "coupling" (for example via a physical link) or direct "connection" as well as an indirect "coupling" or indirect "connection" (for example via a logical link), respectively.

It will be understood that what has been described for one of the methods above may analogously hold true for the seal mounting controller 1000 and/or for the computer system 1100.

### Reference numeral list

- 100: apparatus for mounting a seal
- 110: seal
- 120: housing
- 121: holder
- 122: pneumatic actuator
- 123: slot of the housing
- 125: rotatable arm
- 126: stepper motor
- 127: positioning device
- 130: support device
- 131: pneumatic actuator
- 132: part of the support device
- 133: linkage
- 135: frame
- 136: arm
- 137: plate
- 140: transfer device
- 141: pneumatic actuator
- 142: upper part of the transfer device
- 150: vison system
- 151: first monitoring device or optical sensor
- 152: second monitoring device or optical sensor
- 153: third monitoring device or optical sensor
- 160 to 172: arrows

- 900: flow diagram illustrating a method for mounting a seal at or in a housing
- 902: step of receiving the seal at a support device
- 903: step of visually controlling a correct orientation and shape of the seal
- 904: step of providing a predefined shape to the seal via the support device, the predefined shape corresponding to a desired position of the seal at or in the housing
- 906: step of transferring the seal from the support device to the housing via a transfer device

- 1000: seal mounting controller
- 1003: visual control circuit
- 1002: seal receiving circuit
- 1004: seal shaping circuit
- 1006: seal transfer circuit
- 1007: connection

- 1100: computer system
- 1102: processor
- 1104: memory
- 1106: non-transitory data storage
- 1108: connection

## Claims

1. Apparatus (100) for mounting a seal (110) at or in a housing (120), the apparatus (100) comprising:
a support device (130) for receiving the seal (110),
wherein the support device (130) is configured to provide a predefined shape to the seal (110), the predefined shape corresponding to a desired position of the seal (110) at or in the housing (120), and
a transfer device (140) configured to transfer the seal (110) from the support device (130) to the housing (120).

2. Apparatus (100) according to claim 1, wherein
the support device (130) comprises a plurality of parts (132) which are movable relative to each other and which are each configured to modify the shape of the seal (110).

3. Apparatus (100) according to claim 2, wherein
the plurality of parts (132) includes at least two groups of parts (132), each group is associated with a respective direction in which the parts (132) of the respective group are movable, and
the direction associated with the respective group is different from the directions associated with the other groups.

4. Apparatus (100) according to claim 3, wherein
at least two parts (132) of each group are configured to move oppositely to each other.

5. Apparatus (100) according to any one of claims 2 to 4, wherein
the support device (130) includes at least one actuator (131) for moving the plurality of parts (132).

6. Apparatus (100) according to any one of claims 1 to 5, wherein
the apparatus (100) further includes a vision system (150) which is configured to monitor the position of the seal (110) with respect to the support device (130) and with respect to the housing (120).

7. Apparatus (100) according to claim 6, wherein
the vision system (150) includes at least two different monitoring devices (151, 152, 153) configured to monitor the seal (110) from at least two different directions.

8. Apparatus (100) according to claim 7, wherein
the at least two different directions for monitoring the seal (110) are perpendicular to each other.

9. Apparatus (100) according to any one of claims 1 to 8, wherein
the apparatus (100) further includes a positioning device (127) for positioning the housing (120) close to the support device (130) in order to transfer the seal (110) from the support device (130) to the housing (120).

10. Apparatus (100) according to any one of claims 1 to 9, wherein
the transfer device (140) is further configured to push the seal (110) away from the support device (130) and into the desired position at or in the housing (120).

11. Method (900) for mounting a seal (110) at or in a housing (120),
the method comprising:
receiving (902) the seal (110) at a support device (130),
providing (904) a predefined shape to the seal (110) via the support device (130), the predefined shape corresponding to a desired position of the seal (110) at or in the housing (120),
transferring (906) the seal (110) from the support device (130) to the housing (120) via a transfer device (140).

12. Method (900) according to claim 11, wherein
the seal (110) is received at the support device (130) without any deformation of the seal (110).

13. Method (900) according to claim 11 or 12, wherein
after receiving the seal (110) at the support device (130), a correct orientation and a correct shape of the seal (110) are controlled visually.

14. Method (900) according to any one of claims 11 to 13, wherein
the seal (110) is uniformly extended via the support device (130) in order to provide the predefined shape to the seal (110).

15. Method (900) according to any one of claims 11 to 14, wherein during the step of providing the predefined shape to the seal (110) via the support device (130), the seal (110) is monitored by a vision system (150).
